# EUROPÄISCHE PATENTSCHRIFT

(11) **EP 0 962 504 B1**
(45) Veröffentlichungstag und Bekanntmachung des Hinweises auf die Patenterteilung: **30.07.2003**
(21) Anmeldenummer: 99110614.7
(22) Anmeldetag: 02.06.1999
(51) Int. Cl.: C09D 17/00, C09D 11/00, C09D 11/16

(54) **Wässrige Russdispersionen**
Aqueous dispersions of carbon black
Dispersions aqueuses de noir de carbone

(30) Priorität: 04.06.1998 DE 19824947
(43) Veröffentlichungstag der Anmeldung: 08.12.1999
(73) Patentinhaber: Degussa AG, 40474 Düsseldorf (DE)
(72) Erfinder: Stübbe, Andreas, 63739 Aschaffenburg (DE); Kleinhenz, Horst, 63538 Grosskrotzenburg (DE); Leimann, Jürgen, Dr., 60598 Frankfurt (DE); Karl, Alfons, Dr., 63584 Gründau (DE)

(56) Entgegenhaltungen:
- EP-A- 0 704 503
- EP-A- 0 805 191
- US-A- 4 959 661

## Beschreibung

Die Erfindung betrifft wäßrige Rußdispersionen, ein Verfahren zu ihrer Herstellung und ihre Verwendung.

Wäßrige Rußdispersionen werden zur Herstellung von Druckfarben oder auch direkt als Tinten bei zum Beispiel Tintenstrahldruckern (Ink-Jet) eingesetzt.

Das Ink-Jet-Druckverfahren ist eine bekannte Vervielfältigungstechnik, bei der die Druckfarbe drucklos, also ohne Kontakt des Druckkopfes mit dem Druckmedium, übertragen wird. Dabei werden Tintentropfen aus einer Düse auf ein Empfangsmaterial gespritzt, wobei deren Ablenkung elektronisch steuerbar ist. Diese Technik, auch als druckloses Drucken bezeichnet, eignet sich insbesondere zum Bedrucken von Produkten mit unregelmäßigen Oberflächen und Verpackungen, weil zwischen Druckkopf und Bedruckstoff ein gewisser Abstand besteht. Das Druckverfahren ist sehr flexibel und relativ preiswert und wird deshalb auch im Computerdruck, etwa als Arbeitsplatzdrucker, verwendet. Zunehmend kommt das Ink-Jet-Verfahren auch im industriellen Bereich, etwa in der Außenwerbung, zur Anwendung. In der Außenwerbung muß die Tinte besondere Anforderungen an Lichtechtheit und Wasserbeständigkeit erfüllen. Darüber hinaus müssen die Farbbestandteile sehr feinteilig sein, damit die Druckdüsen nicht verstopfen. Als farbgebende Substanzen werden sowohl Farbstoffe wie in jüngerer Zeit auch Pigmente verwendet. Letztere haben den Vorteil gegenüber Farbstoffen, daß die Lichtechtheit sehr hoch ist und daß sie wasserbeständig sind. Pigmente haben einen Nachteil gegenüber Farbstoffen, der darin besteht, daß sie nur durch eine Behandlung mit oberflächenaktiven Substanzen (Tensiden) stabile Dispersionen mit hoher Lagerbeständigkeit bilden. Pigmentteilchen liegen nicht in der Form von Primärteilchen vor sondern in der Form von Aggregaten. Pigmentaggregate sind größer als lösliche Farbstoffe. Sind Pigmentaggregate nicht ausreichend fein dispergiert, verstopfen sie die Düsen des Druckkopfes. Große Aggregate verändern außerdem die Lichtabsorptionseigenschaften des Pigmentrußes. Eine Vergräulichung der Drucke und ein Verlust an Deckkraft ist die Folge.

Erste Patente, die die Verwendung von Pigmentrußen in Ink-Jet-Tinten behandeln, sind die Schriften US-A 5,085,698 und US-A 5,320 668. Darin wird die Verwendung von wasserlöslichen Acrylaten zur Pigmentstabilisierung beschrieben.

Es ist bekannt, wäßrige Rußdispersionen mit Rußen, deren mittlere Primärteilchengröße nicht größer als 30 nm und deren DBP-Zahl mindestens 75 ml/100 g beträgt, herzustellen (US-A 5, 538,548) .

Es ist weiterhin bekannt, wäßrige Rußdispersionen unter Verwendung von wasserlöslichen organischen Lösungsmitteln und wasserlöslichen Acrylharzen herzustellen
(US-A 5,609,671).

Die bekannten wäßrigen Rußdispersionen weisen die folgenden Nachteile auf:
- die erreichbaren optischen Dichten sind vergleichsweise niedrig
- die Scheuerfestigkeit ist schlecht (siehe Vergleichsbeispiel A, B und C)

Es besteht somit die Aufgabe, Rußdispersionen, die diese Nachteile nicht aufweisen, herzustellen.

Gegenstand der Erfindung sind wäßrige Rußdispersionen, enthaltend neben Wasser die folgenden Komponenten:
Ruß 1 bis 40 Gew.-%, vorzugsweise 3 bis 20 Gew.-%
Tensid 1 bis 30 Gew.-%, vorzugsweise 2 bis 15 Gew.-%,
welche dadurch gekennzeichnet sind, daß die Dispersion eine Netzmittelkombination aus zwei nichtionischen Netzmitteln enthält.

Als Tenside können nichtionische und/oder anionische Netzmittel eingesetzt werden.

Als nichtionische Tenside können eingesetzt werden: Vernetzte Polyoxyethylenacrylsäure (Hypermer CG 6), Fettalkoholoxethylat mit 30 Ethylenglykoleinheiten (Lutensol AO 30).

Als anionische Tenside können Liguinsulfonate, Alkylbenzolsulfonate, Naphthalinsulfonsäurederivate usw. eingesetzt werden.

Die Dispersion kann in einer bevorzugten Ausführungsform eine Kombination aus zwei nichtionischen Netzmitteln enthalten.

In einer bevorzugten Ausführungsform der Erfindung kann eine Kombination aus
a) einer vernetzten Polyoxyethylenacrylsäure und
b) einem Alkoxyethylat, vorzugsweise einem Fettalkoholoxethylat, insbesondere einem Fettalkoholoxyethylat mit 30 Ethylenglykoleinheiten,
eingesetzt werden, wobei das Verhältnis der Tenside b : a = 1 : 2 bis 1 : 10 sein kann.

Durch den weiteren Zusatz eines anionischen Netzmittels, wie zum Beispiel Liguinsulfonate, Alkylbenzolsulfonate, Naphthalinsulfonsäurederivate, kann der Anstieg der Viskosität der Dispersionen bei der Lagerung verhindert werden. Die Rußdispersion kann zusätzlich zu den nichtionischen Netzmitteln ein anionisches Netzmittel, vorzugsweise ein Liguinsulfat und/oder ein kationisches Netzmittel, enthalten.

Als Ruß können Pigmentruße mit einem mittleren Primärteilchendurchmesser von 8 bis 80 nm, vorzugsweise 10 bis 35 nm, und einer DBP-Zahl von 40 bis 200 ml/100 g, vorzugsweise 60 bis 150 ml/100 g, eingesetzt werden. In einer bevorzugten Ausführungsform der Erfindung können Gasruße mit einem mittleren Primärteilchendurchmesser von 8 bis 30 nm, vorzugsweise 10 bis 25 nm, eingesetzt werden.

Ein weiterer Gegenstand der Erfindung ist ein Verfahren zur Herstellung der wäßrigen Rußdispersion, welches dadurch gekennzeichnet ist, daß man für die Dispergierung Perlmühlen, Ultraschall-Mühlen oder ein Ultra-Turrax verwendet. Im Anschluß an die Dispergierung kann die ) Rußdispersion zentrifugiert werden.

Der pH-Wert der Dispersionen, die Gegenstand dieser Erfindung sind, liegt im basischen Bereich, vorzugsweise im Bereich von 8 - 10.

Die erfindungsgemäßen Dispersionen haben eine sehr hohe Flockulatonsstabilität und damit eine hohe Lagerstabilität. Die Aggregatgröße überschreitet nicht 100 nm. Die mittlere Teilchengröße der Rußaggregate, die in der Dispersion vorliegen, beträgt etwa 60 - 100 nm. TEM-Aufnahmen zeigen, daß diese Aggregatgröße auch nach der Trocknung erhalten bleibt. In den Vergleichsbeispielen A, B und C ist dies nicht der Fall. Vielmehr tritt eine deutliche Agglomerisation auf. Die Agglomerate bewirken, daß der Pigmentruß nicht seine volle Deckkraft entfalten kann. Die Drucke haben deshalb niedrige optische Dichten und einen deutlichen Grauton. Die erfindungsgemäßen Dispersionen zeigen demgegenüber eine hohe Deckkraft, die durch die kleinen Aggregatgrößen herrührt. Die erfindungsgemäßen Rußdispersionen verbessern die Druckqualität und die Wasserbeständigkeit von damit hergestellten Ink-Jet-Tinten. Drucke, die mit Ink-Jet-Tinten hergestellt werden, die die erfindungsgemäßen gasrußhaltigen Dispersionen enthalten, zeigen besonders hohe optische Dichten ohne Grauton und eignen sich deshalb ganz besonders für den Einsatz in Ink-Jet- oder Schreibtinten.

Die erfindungsgemäßen Rußdispersionen weisen vorteilhafterweise eine höhere optische Dichte als die bekannten Rußdispersionen auf.

Aufgrund der höheren optischen Dichte wird das Druckbild in einem Vierfarbendruck brillianter und schärfer. In einem Schwarzweißdruck wird das Schriftbild und damit die Lesbarkeit durch einen höheren Kontrast verbessert.

Die erfindungsgemäßen wäßrigen Rußdispersionen können zur Herstellung von Druckfarben, Ink-Yet-Tinten und Schreibtinten verwendet werden.

### Beispiele

Die erfindungsgemäßen Rußdispersionen werden wie folgt hergestellt:

### 1. Vorbereitung der Netzmittellösung

a) Wasser vorlegen und unter Erwärmen bis höchstens 60 °C Lutensol AO 30 lösen. Nach Abkühlung unter Rühren die entsprechenden Mengen an Hypermer CG 6 und AMP 90 bzw. Amin zugeben.
b) Im Dispersionsgefäß destilliertes Wasser vorlegen und bei laufendem Ultra-Turrax (ohne Kühlung) langsam Lutensol AO 30 zugeben. Erwärmung über 60 °C vermeiden! Nach vollständigem Lösen des Lutensols die anderen Komponenten zugeben.

### 2. Einarbeiten des Rußes

Ruß in vorbereitete Netzmittellösung unter langsamem Rühren (entweder von Hand oder mit langsamem Rührwerk) nach und nach einarbeiten.

### 3. Dispergierung

a) Ultra-Turrax
   Die in Punkt 2 vorbereitete Dispersion wird mit dem Ultra-Turrax bei Stufe 10 (Höchststufe) dispergiert. In der Zentrifuge können sehr grobe Teilchen von der so erhaltenen Dispersion abgetrennt werden.
b) Perlmühle
   Die in Punkt 2 vorbereitete Lösung mit dem Ultra-Turrax homogenisieren - um Verstopfung der Pumpe zu vermeiden - und anschließend mit der Perlmühle in 2 Passagen dispergieren. Einstellungen der Durchflußmenge und der Umdrehungszahl der Perlmühle sind variabel. Bedingungen zur Zeit: 3 - 4 l/h Durchflußmenge bei 3000 Upm. Anschließend Dispersion über ein Sieb mit einer Maschenweite von 100 µm geben - im Falle von Perlbrüchen verbleiben hier Reste - und bei 4000 Upm zentrifugieren.

Die Zusammensetzung der wäßrigen Rußdispersionen sowie ihre Eigenschaften sind in der Tabelle 1 dargestellt. Aus der Tabelle 1 kann weiterhin ersehen werden, daß die erfindungsgemäßen wäßrigen Rußdispersionen eine höhere optische Dichte aufweisen.

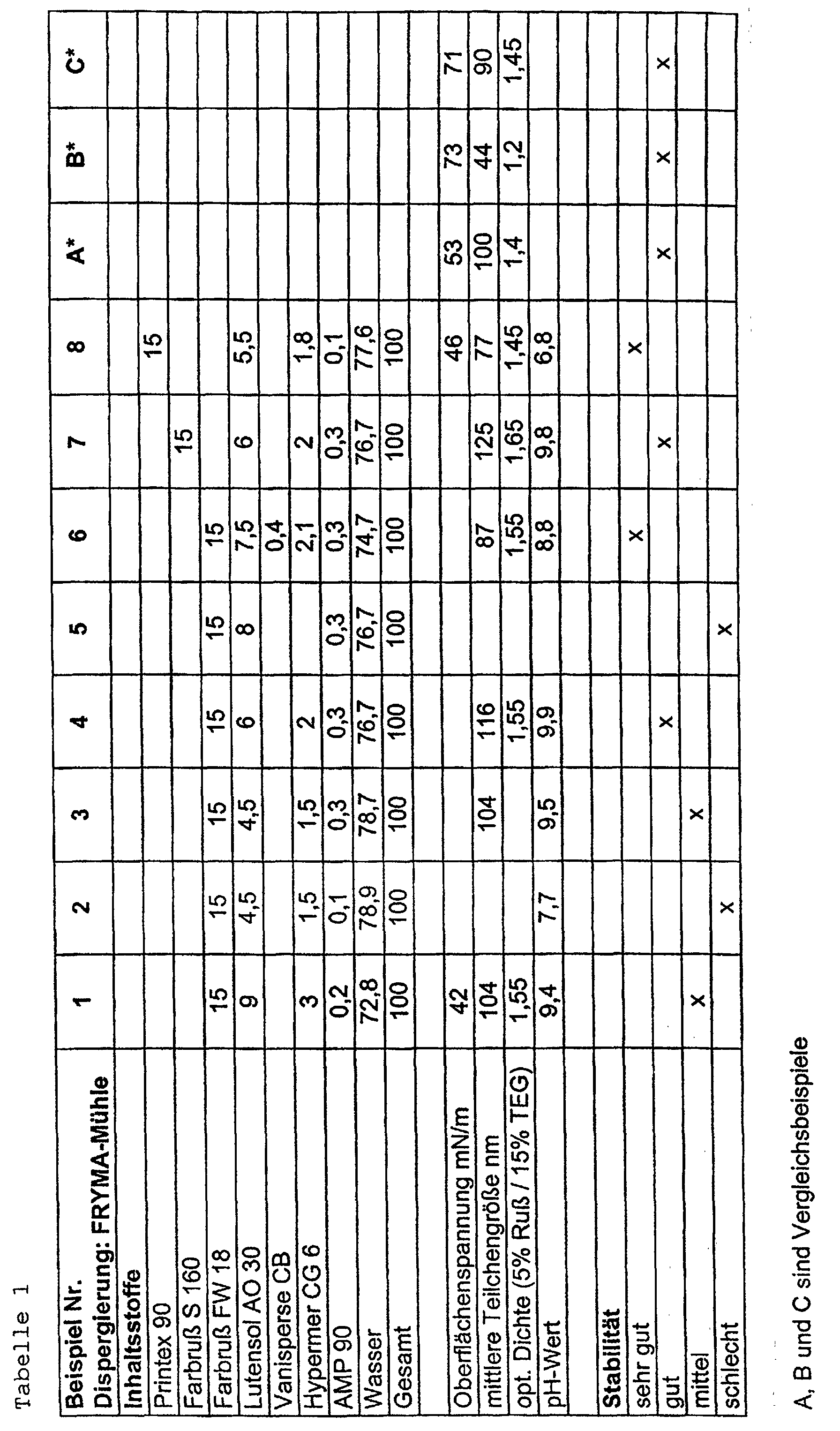

Die Oberflächenspannung wird mit der Plattenmethode nach DIN 53 914 (3/80) bei 20 °C bestimmt.

Die mittlere Teilchengröße nm wird mit der Photonen-Korrelations-Spektroskopie bestimmt.

Die optische Dichte wird mit Mcbeth RD 918 Densitometer an Prüfdrucken, hergestellt auf einem Hewlett Packard Drucker 660 C, bestimmt.

Der pH-Wert wird direkt in der Rußdispersion mit einer handelsüblichen Meßelektrode bestimmt.

Der Stabilitätstest wird wie folgt durchgeführt:

Die Dispersion wird 35 Tage bei 50 °C gelagert, danach bis -30 °C eingefroren und auf 70 °C aufgeheizt.

Bei der Bewertung bedeuten:
- sehr gut =: ohne Sedimentation und ohne Viskositätsanstieg
- gut =: ohne Sedimentation beziehungsweise Flokkulation
- mittel =: deutlicher Viskositätsanstieg, reversibel
- schlecht =: Die Dispersion geliert oder Flokkulation tritt ein

In den Beispielen 1 bis 4 wird die Netzmittelkonzentration variiert. Der verwendete Pigmentruß ist ein Gasruß mit einer mittleren Primärteilchengröße von 15 nm. In Beispiel 1 wird zuviel, in den Beispielen 2 und 3 zuwenig Dispergator eingesetzt. Das Optimum wird mit insgesamt 8 % Dispergator in Beispiel 4 erreicht. Das Verhältnis der Netzmittel Lutensol AO 30 zu Hypermer CG 6 beträgt 3 : 1. In Beispiel 2 wird der pH-Wert von 8 unterschritten und es tritt Flockulation ein. In Beispiel 5 wird nur ein Netzmittel verwendet. Die Stabilisierung ist nicht ausreichend, es tritt ebenfalls Flockulation ein. In Beispiel 6 wird zusätzlich zu Lutensol AO 30 und Hypermer CG 6 ein anionischer Dispergator eingesetzt. Die Stabilität dieser Dispersion ist sehr gut. In dem Beispiel 7 wird ein Gasruß mit einer mittleren Primärteilchengröße von 20 nm verwendet. Die optische Dichte ist bei Verwendung dieser Rußtype besonders hoch. In dem Beispiel 8 wird ein Furnaceruß mit einer mittleren Primärteilchengröße von 14 nm und einer DBP-Adsorption von 95 ml/100 g verwendet. Mit dieser Rußtype wird eine vergleichsweise niedrige optische Dichte erreicht. Die Vergleichsbeispiele A, B und C werden mit handelsüblichen Tinten bzw. Dispersionen durchgeführt. Die optischen Dichten erreichen nicht das Niveau der mit den erfindungsgemäßen Dispersionen hergestellten Tinten. Der Grund dafür liegt in der zuvor erwähnten starken Agglomeration der Ruße während der Trocknung.

Die bei der Herstellung der Rußdispersionen verwendeten Komponenten sind wie folgt charakterisiert:

Der Ruß Printex 90 ist ein Furnaceruß mit einer mittleren Primärteilchengröße von 14 nm und einer DBP-Adsorption von 95 ml/100 g.

Der Farbruß S 160 ist ein Gasruß mit einer mittleren Primärteilchengröße von 20 nm.

Der Farbruß FW 18 ist ein Gasruß mit einer mittleren Primärteilchengröße von 15 nm.

Lutensol AO 30 ist ein nichtionisches Netzmittel.
- Hersteller:: BASF
- Stoffgruppe:: nicht ionisch Alkyloxethylat Fettalkoholoxethylat Fettalkoholoxethylat mit 30 Ethylenglykoleinheiten.

Varnisperse CB ist ein anionisches Netzmittel (Lieferant: Lignotech) .

Hypermer CG 6 ist ein nichtionisches Netzmittel, bestehend aus vernetzter Polyoxyethylenacrylsäure (Hersteller: ICI) AMP 90 ist ein Amin (Hersteller: Angus Chemie)

## Patentansprüche

1. Wäßrige Rußdispersionen, enthaltend neben Wasser die folgenden Komponenten:
| | |
|---|---|
| Ruß | 1 bis 40 Gew.-% |
| Tensid | 1 bis 30 Gew.-%, |
**dadurch gekennzeichnet, daß** die Dispersion eine Netzmittelkombination aus zwei nichtionischen Netzmitteln enthält.

2. Wäßrige Rußdispersion nach Anspruch 1, **dadurch gekennzeichnet, daß** die Dispersion einen Pigmentruß einer mittleren Primärteilchengröße von 8 bis 80 nm, vorzugsweise 10 bis 35 nm und einer DBP-Zahl von 40 bis 200 ml/100 g, vorzugsweise 60 bis 150 ml/100 g enthält.

3. Wäßrige Rußdispersion nach Anspruch 1, **dadurch gekennzeichnet, daß** die Dispersion einen Gasruß einer mittleren Primärteilchengröße von 8 bis 30 nm, vorzugsweise 10 bis 25 nm, enthält.

4. Wäßrige Rußdispersion nach Anspruch 1, **dadurch gekennzeichnet, daß** die nichtionischen Netzmittel eine Kombination aus
a) einer vernetzten Polyoxethylenacrylsäure und
b) einem Alkyloxethylat, vorzugsweise einem Fettalkoholoxethylat, insbesondere einem Fettalkoholoxethylat mit 30 Ethylenglykoleinheiten sind.

5. Wäßrige Rußdispersion nach Anspruch 4, **dadurch gekennzeichnet, daß** die nichtionischen Netzmmittel in dem Verhältnis b : a = 1 : 2 bis 1 : 10 verwendet werden.

6. Wäßrige Rußdispersion nach Anspruch 4, **dadurch gekennzeichnet, daß** zusätzlich zu den nichtionischen Netzmitteln ein anionisches Netzmittel, vorzugsweise ein Ligninsulfonat und/oder ein kationisches Netzmittel verwendet wird.

7. Verfahren zur Herstellung der wäßrigen Rußdispersionen nach Anspruch 1, **dadurch gekennzeichnet, daß** für die Dispergierung Perlmühlen, Ultraschall-Mühlen oder ein Ultra-Turrax verwendet werden.

8. Verfahren zur Herstellung der wäßrigen Rußdispersionen nach Anspruch 1, **dadurch gekennzeichnet, daß** die wäßrige Rußdispersion im Anschluß an die Dispergierung zentrifugiert wird.

9. Verwendung der wäßrigen Rußdispersionen gemäß den Ansprüchen 1 bis 6 zur Herstellung von Ink-Jet-Tinten und Schreibtinten.

## Claims

1. Aqueous dispersions of carbon black containing, in addition to water, the following components:
| | |
|---|---|
| carbon black | from 1 to 40 wt.% |
| surfactant | from 1 to 30 wt.%, |
**characterised in that** the dispersion contains a wetting agent combination of two non-ionic wetting agents.

2. Aqueous dispersion of carbon black according to claim 1, **characterised in that** the dispersion contains a pigment carbon black having a mean primary particle size of from 8 to 80 nm, preferably from 10 to 35 nm, and a DBP number of from 40 to 200 ml/100 g, preferably from 60 to 150 ml/100 g.

3. Aqueous dispersion of carbon black according to claim 1, **characterised in that** the dispersion contains a gas carbon black having a mean primary particle size of from 8 to 30 nm, preferably from 10 to 25 nm.

4. Aqueous dispersion of carbon black according to claim 1, **characterised in that** the non-ionic wetting agents are a combination of
a) a crosslinked polyoxyethyleneacrylic acid and
b) an alkyl ethoxylate, preferably a fatty alcohol ethoxylate, especially a fatty alcohol ethoxylate having 30 ethylene glycol units.

5. Aqueous dispersion of carbon black according to claim 4, **characterised in that** the non-ionic wetting agents are used in the ratio b : a = 1 : 2 to 1 : 10.

6. Aqueous dispersion of carbon black according to claim 4, **characterised in that**, in addition to the non-ionic wetting agents, an anionic wetting agent, preferably a lignosulfonate, and/or a cationic wetting agent is used.

7. Process for the preparation of the aqueous dispersions of carbon black according to claim 1, **characterised in that** bead mills, ultrasonic mills or an Ultra-Turrax are used for the dispersion.

8. Process for the preparation of the aqueous dispersions of carbon black according to claim 1, **characterised in that** the aqueous dispersion of carbon black is centrifuged after the dispersion.

9. Use of the aqueous dispersions of carbon black according to claims 1 to 6 in the production of inkjet inks and writing inks.

## Revendications

1. Dispersion aqueuse de noir de carbone, contenant outre de l'eau les composants suivants :
noir de carbone 1 à 40 % en poids
tensioactif 1 à 30 % en poids,
**caractérisée en ce que**
la dispersion contient une association d'agents mouillants à base de deux agents mouillants non ioniques.

2. Dispersion aqueuse de noir de carbone selon la revendication 1, **caractérisée en ce que**
la dispersion contient un noir de carbone pigmentaire ayant une taille moyenne de particule primaire de 8 à 80 nm, de préférence de 10 à 35 nm, et un indice DBP de 40 à 200 ml/100 g, de préférence de 60 à 150 ml/ 100 g.

3. Dispersion aqueuse de noir de carbone selon la revendication 1, **caractérisée en ce que**
la dispersion contient un noir de carbone ayant une taille moyenne de particule primaire de 8 à 30 nm, de préférence de 10 à 25 nm.

4. Dispersion aqueuse de noir de carbone selon la revendication 1, **caractérisée en ce que**
les agents mouillants non ioniques sont une association de
a) un acide acrylique polyoxyéthylénique réticulé et
b) un produit d'alkyloxyéthylation, de préférence un produit d'oxyéthylation d'alcool gras, en particulier un produit d'oxyéthylation d'alcool gras comportant 30 groupes éthylèneglycol.

5. Dispersion aqueuse de noir de carbone selon la revendication 4, **caractérisée en ce que**
les agents mouillants non ioniques sont utilisés dans le rapport b/a =1:2 à 1:10.

6. Dispersion aqueuse de noir de carbone selon la revendication 4, **caractérisée en ce qu'**
en plus des agents mouillants non ioniques, on utilise un agent mouillant anionique, de préférence un ligninesulfonate et/ou un agent mouillant cationique.

7. Procédé pour la préparation des dispersions aqueuses de noir de carbone selon la revendication 1,
**caractérisé en ce qu'**
on utilise pour la dispersion des broyeurs à billes, des broyeurs à ultrasons ou un homogénéisateur Ultra-Turrax.

8. Procédé pour la préparation des dispersions aqueuses de noir de carbone selon la revendication 1,
**caractérisé en ce que**
la dispersion aqueuse de noir de carbone est centrifugée après la dispersion.

9. Utilisation des dispersions aqueuses de noir de carbone selon les revendications 1 à 6, pour la fabrication d'encres pour jet d'encre et d'encres pour écriture.
